(19) **Europäisches Patentamt / European Patent Office / Office européen des brevets**

(11) **EP 1 128 569 B1**

(12) **EUROPEAN PATENT SPECIFICATION**

(45) Date of publication and mention of the grant of the patent:
**16.12.2009 Bulletin 2009/51**

(51) Int Cl.:
*H04B 1/707* (2006.01)   *H04J 13/00* (2006.01)
*H04B 1/10* (2006.01)   *H04B 7/005* (2006.01)
*H04B 7/26* (2006.01)

(21) Application number: **99949371.1**

(22) Date of filing: **22.10.1999**

(86) International application number:
**PCT/JP1999/005845**

(87) International publication number:
**WO 2000/027042 (11.05.2000 Gazette 2000/19)**

(54) **MOBILE STATION RECEIVING METHOD AND MOBILE STATION RECEIVER**

EMPFANGSVERFAHREN FÜR MOBILSTATION UND MOBILSTATIONSEMPFÄNGER

TECHNIQUE DE RECEPTION POUR STATION MOBILE ET RECEPTEUR DE STATION MOBILE

(84) Designated Contracting States:
**DE FI FR GB IT SE**

(30) Priority: **04.11.1998 JP 31344598**

(43) Date of publication of application:
**29.08.2001 Bulletin 2001/35**

(73) Proprietor: **NEC CORPORATION**
**Minato-ku,**
**Tokyo 108-0014 (JP)**

(72) Inventor: **FURUKAWA, Hiroshi,**
**NEC Corporation**
**Minato-ku,**
**Tokyo 108-0014 (JP)**

(74) Representative: **Betten & Resch**
**Patentanwälte**
**Theatinerstrasse 8**
**(Fünf Höfe)**
**80333 München (DE)**

(56) References cited:
JP-A- 9 153 843    JP-A- 10 051 424
JP-A- 10 200 503

• ANJA KLEIN ET AL: "Zero Forcing and Minimum Mean-Square-Error Equalization for Multiuser Detection in Code-Division Multiple-Access Channels" IEEE TRANSACTIONS ON VEHICULAR TECHNOLOGY, IEEE SERVICE CENTER, PISCATAWAY, NJ, US, vol. 45, no. 2, May 1996 (1996-05), XP011063489 ISSN: 0018-9545
• LEE E A; MESSERSCHMITT D G: "Digital Communication - Second Edition" 1994, KLUWER ACADEMIC PUBLISHERS , USA , XP002394288 * page 546 - page 548 * * figures 11-13,11-14 *
• PROAKIS J G: "Digital Communications" 1989, MCGRAW-HILL , NEW YORK , XP002394287 * page 555 - page 561 * * figures 6.4.2,6.4.3 *

## Description

Technical Field

The present invention relates to a mobile station receiving method and receiver for a mobile station and a communication system on a down channel in a CDMA (Code Division Multiple Access) cellular system, wherein a plurality of signals modulated by pseudo noise sequences which are orthogonal with each other.

Background Art

In the down channel of the code division multiple access cellular mobile communication system (CDMA cellular), the transmission signals to the terminals are modulated by the orthogonal pseudo noise sequences which are synchronized with each other.

The interference between the codes is reduced by using the synchronized orthogonal codes, thereby obtaining a high communication capacity. The mobile terminal filters the received signal by using a matching filter which is provided with tap coefficients which correspond to the pseudo noise sequences allocated to the mobile terminal, in order to select the signal directed to the mobile terminal. The output from the matching filter becomes great, when the correlation between the pseudo noise sequences indicated by the tap coefficients and the received signal.

The signal transmitted from the base station is distorted through a plurality of propagation paths. Therefore, the mobile station receives a plurality of delayed signal components. Accordingly, the waveform outputted from the matching filter contains a plurality of peaks affected by propagation losses and delays. The mobile station can make good use of the received signal, if the mobile station demodulates the plurality of the peaks independently and combines them. The RAKE receiving method is indispensable for the CDMA cellular, because it utilizes effectively the plurality of signal components dispersed by the plurality of delay times. The RAKE receiving is, for example, described in Proceedings of the IRE, pp.555-570, March, 1958.

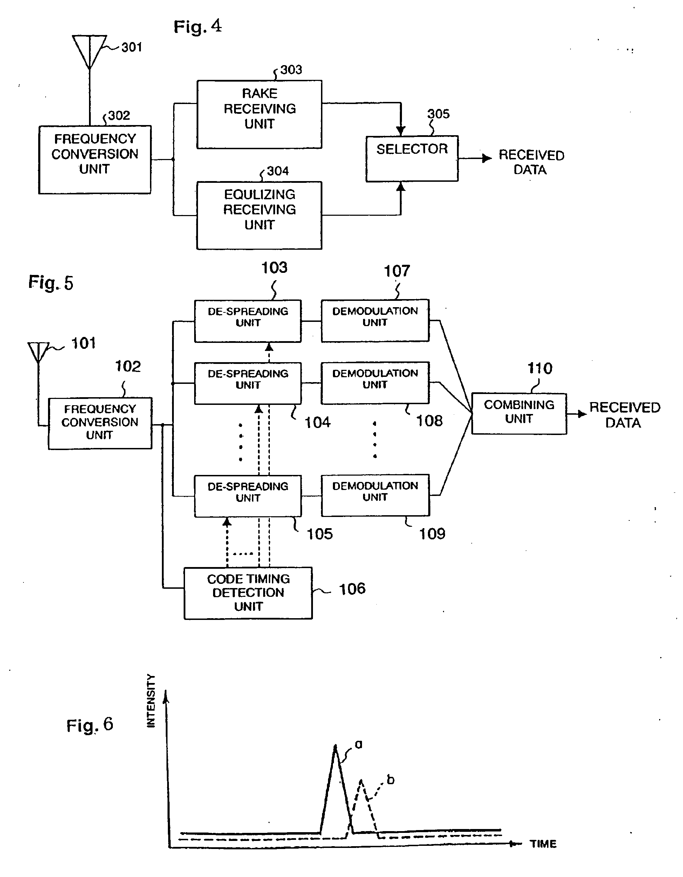

Figure 5 is an example of a conventional mobile receiver provided with the RAKE receiving unit. The signal received by antenna 101 is converted into a base band signal by frequency conversion unit 102. The output from frequency conversion unit 102 is outputted toward code timing detection unit 106 in order to measure demodulation timings and received signal intensities of signal components of a plurality of delay times. The output from frequency conversion unit 102 which contains the signal components of the plurality of delay times is also inputted into despreading unit 103 ~ 105 in order to despreading the signal, on the basis of the demodulation timings and the received signal intensities which are detected by code timing detection unit 106.

Further, the outputs from de-spreading units 103 to 105 are inputted into decoders 107 to 109 in order to decode the signal components. The decoded signal components are combined by combining unit 110 in order to output received data.

Figure 6 is an example of a received waveform measured by code timing detection unit 106. The horizontal axis represents time and the vertical axis represents signal intensity. The waveform "a" and "b" are the signal components which are received at different timings. The two signal components through different propagation paths are shown separately for simplicity in Figure 6, although they are superimposed in the waveform actually received. As shown in Figure 6, the received waveform has a plurality of peaks due to distortions by propagation paths. Code timing detection unit 106 detects the peak positions and the peak intensities.

The communication quality of the mobile station is decided only by interference from other cells and noise, because any interference does not occur in principle in a cell on distortion-free down channel, when the orthogonal synchronous codes are used by the CDMA transmitter. However, an effect of channel distortion is actually inevitable, because signals are spread in wide band in the CDMA.

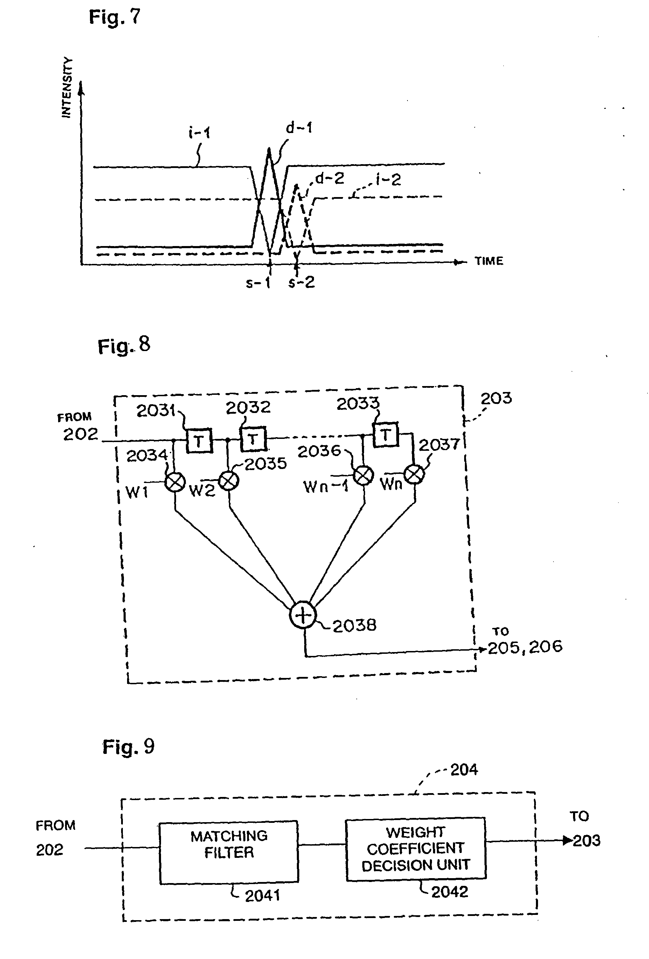

Due to interference caused by the channel distortion, signal components of deferent decoding timings are received. Figure 7 is an example of the waveform measured by code timing Therefore, an object of the present invention is to suppress the interference due to the channel distortion in the CDMA cellular system, wherein desired signals and undesired signals are spread by the orthogonal pseudo random codes.

Prior art document "Zero Forcing and Minimum-Square-Error Equalization for Multiuser Detection in Code-Division Multiple-Access Channels", IEEE TRANSACTIONS ON VEHICULAR TECHNOLOGY, Vol. 45, No. 2, May 1996 by Anja Klein et al. describes four suboptimum detection techniques based on zero forcing and minimum mean-square-error equalization with and without decision feedback. They combat both intersymbol and multiple-access interference.

The document "Digital Communications", McGraw-Hill, New York, 1989, p. 555 - 561, by J. Proakis discloses a peak distortion criterion and the zero-facing algorithm. The peak distortion criterion is defined as the minimization of the worst intersymbol interference at the output of an equalizer. The complete elimination of the intersymbol interference requires the use of an equalizer, whose transfer function is the inverse filter to a linear filter model. This filter is called zero-forcing filter.

The document "Digital Communication - Second Edition", Kluwer Academic Publisher, USA, 1994, p. 546-548, by E. A. Lee and D. G. Messerschmitt teaches about passband equalization prior to signal demodulation. A sampled channel output is fed through a passband equalizer, which inverts a response signal to yield a good estimate of rotated symbols.

Disclosure of the Invention

In the signal receiving method and apparatus for mobile station of the present invention in the CDMA cellular system using the synchronous orthogonal codes on the down channel, the mobile receiver or a down channel receiver includes an equalizer for equalizing the channel distortion.

On the down channel of the code division multiple access cellular mobile communication system (CDMA cellular), the signals transmitted to the mobile terminals are spectrum-spread signals by the orthogonal codes which are synchronized with each other. The signals transmitted by the base station are received by the mobile terminals through a plurality of propagation paths which causes the channel distortions which cause a plurality of signal components with a plurality of delay times. The signal components at different decoding timings are received as interference. The equalizer equalizes the channel distortions before decoding the received signals.

The present invention is directed to the down channel in the code division multiple access CDMA cellular communication system, wherein the base station makes up a plurality of spectrum-spread signals by using the orthogonal codes, and transmits them by superposing them in the synchronized state, while the plurality of mobile stations receives them which are distorted by a plurality of radio channels with different delay times.

In the signal receiving method and apparatus for mobile station of the present invention in the CDMA cellular system using the synchronous orthogonal codes on the down channel, the mobile receiver or a down channel receiver includes an equalizer for equalizing the channel distortion.

On the down channel of the code division multiple access cellular mobile communication system (CDMA cellular), the signals transmitted to the mobile terminals are spectrum-spread signals by the orthogonal codes which are synchronized with each other. The signals transmitted by the base station are received by the mobile terminals through a plurality of propagation paths which causes the channel distortions which cause a plurality of signal components with a plurality of delay times. The signal components at different decoding timings are received as interference. The equalizer equalizes the channel distortions before decoding the received signals.

The present invention is directed to the down channel in the CDMA cellular communication system, wherein the base station makes up a plurality of spectrum-spread signals by using the orthogonal codes, and transmits them by superposing them in the synchronized state, while the plurality of mobile stations receives them which are distorted by a plurality of radio channels with different delay times. In this communication system, the mobile station comprises a frequency conversion unit for converting the signal receive by an antenna into a base band signal, a propagation channel estimation unit for detecting a frequency characteristic of the radio channel on the basis of the uotput from the frequency conversion unit, a filter unit for generating the inverse characteristic of the radio channel, and a decoding unit for decoding the output from the filter unit.

According to the present invention, the interference due to the channel distortion is eliminated, because the delay is eliminated by the equalization of the frequency characteristic by generating the inverse frequency characteristic. Accordingly, the communication quality becomes high and the communication capacity becomes large, due to the elimination of the interference.

The distortion of the desired signal from the connected base station is the same as that of the interference signal, because the propagation paths of the desired signal is the same as that of the interference signal. Therefore, the interference is eliminated by equalizing the channel distortion suffered by the signal received by the mobile station.

Brief Explanation of the Drawings

    Figure 1 shows an embodiment of the mobile terminal of the present invention.
    Figure 2 is a waveform outputted from the equalizing filter.
    Figure 3 is a graph of received DUR vs. the number of users of the mobile terminals.
    Figure 4 shows another embodiment of the mobile terminal of the present invention.
    Figure 5 shows a conventional mobile terminal.
    Figure 6 is a waveform outputted from a matching filter of the conventional mobile terminal.
    Figure 7 a waveform outputted from a matching filter of the conventional mobile terminal, when interference exists.
    Figure 8 is a block diagram of the equalizing filter used by the mobile terminal of the present invention.
    Figure 9 is a block diagram of the channel estimation unit used by the mobile terminal of the present invention.

Best Mode for Carrying Out the Invention

The best mode for carrying out the present invention is explained, with reference to the drawings.

[First Embodiment]

(Construction of the first embodiment)

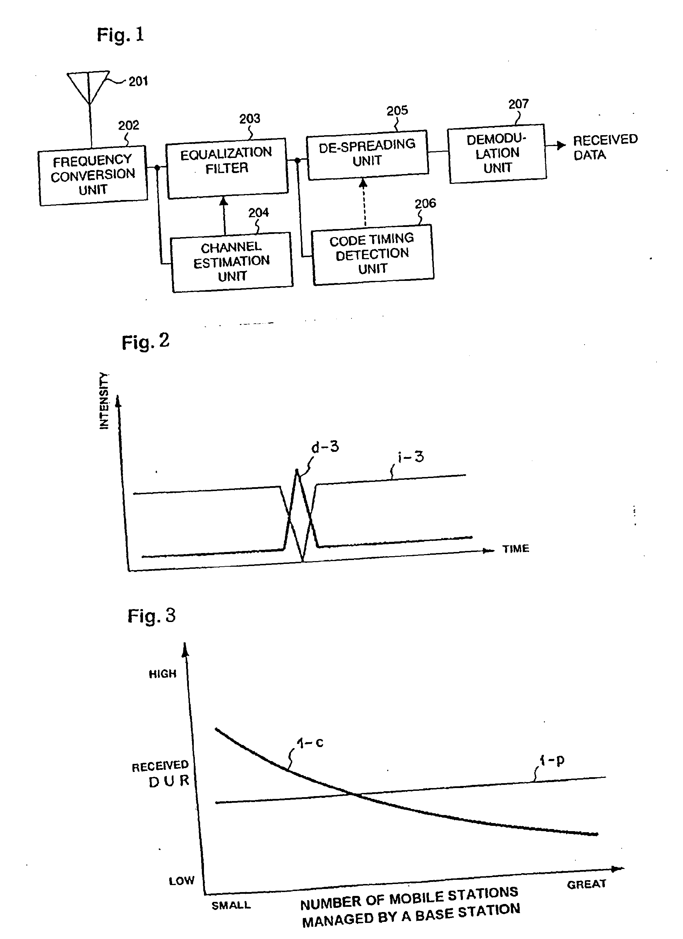

The first embodiment of the present invention is shown in Figure 1. In Figure 1, the signal received by antenna 201 is inputted into frequency conversion unit 202 which may be of direct system for converting directly the received signal into a base band signal, or may be of super heterodyne for converting the received signal into a base band signal through a radio frequency amplification stage, an intermediate frequency amplification stage and a detection stage. The output from frequency conversion unit 202 is inputted simultaneously into both of equalizing filter 203 and channel estimation unit 204. The transfer function F(f) of equalizing filter 203 is made to be the inverse of the transfer function C(f) of the propagation channel which are estimated by channel estimation unit 204. Therefore,

$$F(f) = 1/C(f)......(1) ,$$

where "f" is frequency.

Next, the output from equalizing filter is inputted simultaneously into both of de-spreading unit 205 and code timing detection unit 206. Code timing detection unit 206 measures the decoded timing of the signal component of which distortion is eliminated by equalizing filter 203, while de-spreading unit 205 de-spreads the signal component at the decoded timing. The de-spread signal is inputted into decoding unit 207 in order to output the received data.

Figures 8 and 9 show embodiments of equalizing filter 203 and channel estimation unit 204, respectively. Equalizing filter 203 as shown in Figure 8 is a feed forward filter with "n" raps. As shown in Figure 8, the base band signal outputted from frequency conversion unit 202 goes through delay circuits T2031 to 2033 which are connected in series. The outputs from delay circuits are multiplied by tap weight coefficients W1 to W3, respectively, and then added in adder 2038. The output fron adder 2038 is outputted toward de-spreading unit 205 and code timing detection unit 206.

The base band signal outputted from frequency conversion unit 202 is also inputted into channel estimation unit 204 as shown in Figure 9. The base band signal includes a pilot signal which is a spectrum spread signal with a prescribed pseudo noise sequence. Matching filter 2041 is matched to the pilot signal. Therefore, an impulse response is obtained by inputting the base band signal into matching filter 2041. The output from matching filter 2041 is inputted into weight coefficients decision unit 2042 in order to decide tap weight coefficients W1 to Wn in equalizing filter 2041 as shown in Figure 8. Here, the tap weight coefficients W1 to Wn are decided in such a manner that the characteristics of equalizing filter is inverse of the impulse response of the channel. Weight coefficients decision unit 2042 outputs the decided tap weight coefficients W1 to Wn toward equalizing filter 203.

Although a single de-spreading unit 205 and a single decoding unit 207 are shown in Figure 1, RAKE receiving system which contains a plurality of de-spreading units and combining the results of de-spreading may be adopted in order to improve a data error rate.

(Explanation of the Operation of the Embodiment)

Figure 2 shows an example of a received waveform measured by timing detection unit 206 in the receiving system for mobile station of the present invention. The desired signal is waveform d-3, while the undesired signal is waveform i-3.

In Figure 2, the desired signal is separated from the undesired signal, for easy understanding, although the waveform actually received is a superposition od the two wave forms. The output from the matching filter contains interference due to the undesired signal components at the sample points as shown in Figure 7, under the channel distortion.

However, The interference disappear at the sample points where the received signal become maximum, because the channel distortion is equalized as shown in Figure 2 in the receiving system for mobile station of the present invention. Figure 3 shows the DUR (Desired to Undesired signal power Ratio) of the conventional system as shown in Figure 5 and the DUR of the system of the present invention as shown in Figure 1.

In Figure 3, curve 1-c is the DUR of the conventional system, while curve 1-p is the DUR of the system of the present invention. The DUR as shown by curve 1-c decreases as the mobile stations increase, while the DUR as shown by curve 1-p stays constant regardless of the number of mobile stations. On the other hand, when the number of mobile stations decreases, the DUR as shown by curve 1-c becomes greater than the DUR of the system of the present invention, due to the effect of the RAKE receiving. In conclusion, The communication quality of the present invention becomes better than that of the conventional system, due to the elimination of interference by the equalization, when a lot of mobile stations is controlled by a base station.

Therefore, a single base station can controls greater number of mobile stations in the present invention than in the conventional system.

[Second Embodiment]

The second embodiment of the present invention is shown in Figure 4. As shown in Figure 4, the signal received by antenna 301 is converted into a base band signal by frequency conversion unit 302 of which output is inputted into RAKE receiver 303 and equalizing receiver 304.

RAKE receiver 303 may be the conventional RAKE receiver as shown in Figure 5, while equalizing receiver may be the equalizing receiver as shown in Figure 1. The outputs from RAKE receiver 303 and equalizing receiver 304 are inputted into selector 305 in order to output higher quality data.

In the second embodiment as shown in Figure 4, the output from RAKE receiver is compared with the output from equalizing receiver, in order to select the higher quality signal. As shown in Figure 3, the signal quality becomes lower, when the signal is decoded only by the equalizing under the smaller number of mobile stations controlled by a base station. However, according to the second embodiment, the signal quality is high due to the effect of RAKE receiving, even when the number of mobile stations is small.

<u>Industrial Applicability</u>

According to the present invention, the interference due to the undesired signal of which timing is different from that of the desired signal is eliminated by the equalization of channel distortion. Therefore, the communication quality becomes high and the down channel capacity becomes large, due to the interference elimination.

**Claims**

1. A mobile station receiving method on a down channel for a CDMA (Code Division Multiple Access) cellular system in which a base station modulates, by using orthogonal pseudo noise sequences, transmission signals towards a plurality of mobile stations, transmits the modulated signals synchronously, while said mobile stations receive the modulated signals distorted by a plurality of radio channels of which delay times are different, which comprises:

   a first method step for equalizing and demodulating said modulated signals from said base station, by using a filter (203) of which frequency characteristics is inverse with that of said radio channels; and
   a second method step for demodulating independently each of said modulated signals which pass through a plurality of said radio channels of which delay times are different, and for combining the demodulation results,
   and wherein an output with higher communication quality is selected among the outputs by said first and second method steps.

2. The mobile station receiving method according to claim 1, wherein said using a filter comprises:

   using a plurality of delay circuits (2031, 2032, 2033) which are connected in series;
   using a plurality of multipliers each of which multiples each prescribed weight coefficient (W1, W2, W3) by the output from each delay circuit; and
   using an adder 2038 for adding the outputs from said multipliers,
   wherein said modulated signals are equalized adaptively as the distortions of said radio channels changes.

3. A mobile station receiving apparatus on a down channel for a CDMA (Code Division Multiple Access) cellular system in which a base station modulates, by using orthogonal pseudo noise sequences, transmission signals towards a plurality of mobile stations, transmits the modulated signals synchronously, while said mobile stations receive the modulated signals distorted by a plurality of radio channels of which delay times are different, wherein said mobile station comprises a first receiving unit (304), a second receiving unit (303) and a selection unit (305), wherein:

   said first receiving unit comprises:

   a frequency conversion unit (202) for converting said modulated signals received by an antenna (201) into base band signals;
   a channel estimation unit 204 for detecting frequency characteristics of said radio channels on the basis of said modulated signals;
   a filter unit (203) of which frequency characteristics is inverse with that of said radio channels; and
   a demodulator (207) for demodulating the outputs from said filter unit of which inputs are said base band signals, and

   said second receiving unit comprises:

   a demodulation unit (107) for demodulating independently each of said modulated signals which pass through a plurality of said radio channels of which delay times are different; and
   a combining unit (110) for combining the demodulation results,
   and wherein said selection unit (305) selects an output with higher communication quality is selected among the outputs by said first and second receiving units.

4. A communication system on a down channel for a CDMA (Code Division Multiple Access) cellular system in which a base station modulates, by using orthogonal pseudo noise sequences, transmission signals towards a plurality of mobile stations, transmits the modulated signals synchronously, while said mobile stations receive the modulated signals distorted by a plurality of radio channels of which delay times are different, wherein said mobile station comprises a first receiving unit (304), a second receiving unit (303) and a selection unit (305), wherein:

   said first receiving unit comprises:

   a frequency conversion unit (202) for converting said modulated signals received by an antenna (201) intro base band signals;
a channel estimation unit (204) for detecting frequency characteristics of said radio channels on the basis of said modulated signals;
a filter unit (203) of which frequency characteristics is inverse with that of said radio channels; and
a demodulator (207) for demodulating the outputs from said filter unit of which inputs are said base band signals, and

said second receiving unit comprises:

a demodulation unit (107) for demodulating independently each of said modulated signals which pass through a plurality of said radio channels of which delay times are different; and
a combining unit (110) for combining the demodulation results,
and wherein said selection unit selects (305) an output with higher communication quality is selected among the outputs by said first and second receiving units.

**Patentansprüche**

1. Mobilstations-Empfangsverfahren auf einem Abwärtskanal für ein CDMA (Code Division Multiple Access; Codemultiplex) Zellularsystem, bei dem eine Basisstation unter Verwendung von orthogonalen Pseudorauschsequenzen Sendesignale zu einer Mehrzahl von Mobilstationen moduliert und die modulierten Signale synchron sendet, während die Mobilstationen die durch eine Mehrzahl von Funkkanälen, deren Verzögerungszeiten verschieden sind, verzerrten modulierten Signale empfängt, wobei das Verfahren umfasst:

einen ersten Verfahrensschritt zum Entzerren und Demodulieren der modulierten Signale von der Basisstation unter Verwendung eines Filters (203), dessen Frequenzcharakteristik invers zu jener der Funkkanäle ist; und
einen zweiten Verfahrensschritt zum unabhängigen Demodulieren eines jeden der modulierten Signale, welche eine Mehrzahl der Funkkanäle durchlaufen, deren Verzögerungszeiten verschieden sind, und zum Kombinieren der Demodulationsergebnisse,
und wobei ein Ausgangssignal mit höherer Übertragungsgüte unter den Ausgangssignalen der ersten und zweiten Verfahrensschritte ausgewählt wird.

2. Mobilstations-Empfangsverfahren nach Anspruch 1, wobei die Verwendung eines Filters umfasst:

Verwendung einer Mehrzahl von Verzögerungsschaltungen (2031, 2032, 2033), welche in Reihe verbunden sind;
Verwendung einer Mehrzahl von Multiplizierern, deren jeder vorgeschriebene Gewichtskoeffizienten (W1, W2, W3) mit dem Ausgangssignal einer jeden Verzögerungsschaltung multipliziert; und
Verwendung eines Addierers (2038) zum Addieren der Ausgangssignale der Multiplizierer, wobei die modulierten Signale adaptiv entzerrt werden, wenn sich die Verzerrungen der Funkkanäle ändern.

3. Mobilstations-Empfangsvorrichtung auf einem Abwärtskanal für ein CDMA (Code Division Multiple Access; Codemultiplex) Zellularsystem, bei dem eine Basisstation unter Verwendung von orthogonalen Pseudorauschsequenzen Sendesignale zu einer Mehrzahl von Mobilstationen moduliert und die modulierten Signale synchron sendet, während die Mobilstationen die durch eine Mehrzahl von Funkkanälen, deren Verzögerungszeiten verschieden sind, verzerrten modulierten Signale empfängt, wobei die Mobilstation eine erste Empfangseinheit (304), eine zweite Empfangseinheit (303) und eine Auswahleinheit (305) aufweist, wobei:

die erste Empfangseinheit umfasst:

eine Frequenzwandlungseinheit (202) zum Umwandeln der durch eine Antenne (201) empfangenen modulierten Signale in Basisbandsignale;
eine Kanalschätzeinheit (204) zum Erkennen von Frequenzcharakteristik der Funkkanäle auf Basis der modulierten Signale;
eine Filtereinheit (203), deren Frequenzcharakteristik invers zu jener der Funkkanäle ist; und
einen Demodulator (207) zum Demodulieren der Ausgangssignale der Filtereinheit, deren Eingangssignale die Basisbandsignale sind, und

die zweite Empfangseinheit umfasst:

eine Demodulationseinheit (107) zum unabhängigen Demodulieren eines jeden der modulierten Signale, welche eine Mehrzahl der Funkkanäle durchlaufen, deren Verzögerungszeiten verschieden sind, und
eine Kombiniereinheit (110) zum Kombinieren der Demodulationsergebnisse,
und wobei die Auswahleinheit (305) ein Ausgangssignal mit höherer Übertragungsgüte unter den Ausgangssignalen der ersten und zweiten Empfangseinheiten auswählt.

4. Kommunikationssystem auf einem Abwärtskanal für ein CDMA (Code Division Multiple Access; Codemultiplex) Zellularsystem, bei dem eine Basisstation unter Verwendung von orthogonalen Pseudorauschsequenzen Sendesignale zu einer Mehrzahl von Mobilstationen moduliert und die modulierten Signale synchron sendet, während die Mobilstationen die durch eine Mehrzahl von Funkkanälen, deren Verzögerungszeiten verschieden sind, verzerrten modulierten Signale empfängt, wobei die Mobilstation eine erste Empfangseinheit (304), eine zweite Empfangseinheit (303) und eine Auswahleinheit (305) aufweist, wobei:

die erste Empfangseinheit umfasst:

eine Frequenzwandlungseinheit (202) zum Umwandeln der durch eine Antenne (201) empfangenen modulierten Signale in Basisbandsignale;
eine Kanalschätzeinheit (204) zum Erkennen von Frequenzcharakteristik der Funkkanäle auf Basis der modulierten Signale;
eine Filtereinheit (203), deren Frequenzcharakteristik invers zu jener der Funkkanäle ist; und
einen Demodulator (207) zum Demodulieren der Ausgangssignale der Filtereinheit, deren Eingangssignale die Basisbandsignale sind, und

die zweite Empfangseinheit umfasst:

eine Demodulationseinheit (107) zum unabhängigen Demodulieren eines jeden der modulierten Signale, welche eine Mehrzahl der Funkkanäle durchlaufen, deren Verzögerungszeiten verschieden sind, und
eine Kombiniereinheit (110) zum Kombinieren der Demodulationsergebnisse,
und wobei die Auswahleinheit (305) ein Ausgangssignal mit höherer Übertragungsgüte unter den Ausgangssignalen der die ersten und zweiten Empfangseinheiten auswählt.

**Revendications**

1. Procédé de réception de station mobile sur un canal descendant pour un système cellulaire d'accès multiple par répartition en code (CDMA) dans lequel une station de base module, en utilisant des séquences de bruit pseudo-orthogonal, des signaux de transmission vers une pluralité de stations mobiles, transmet les signaux modulés de manière synchrone, tandis que lesdites stations mobiles reçoivent les signaux modulés déformés par une pluralité de canaux radio dont les délais d'attente sont différents, lequel comporte :

une première étape de procédé consistant à uniformiser et démoduler lesdits signaux modulés en provenance de ladite station de base, en utilisant un filtre (203) dont les caractéristiques de fréquence sont l'inverse de celles desdits canaux radio ; et
une seconde étape de procédé consistant à démoduler de manière indépendante chacun desdits signaux modulés transitant à travers une pluralité desdits canaux radio dont les délais d'attente sont différents, et à combiner les résultats de démodulation,
et dans lequel une sortie présentant une qualité supérieure de communication est choisie parmi les sorties par les première et seconde étapes de procédé.

2. Procédé de réception de station mobile selon la revendication 1, dans lequel ladite étape consistant à utiliser un filtre comporte les étapes ci-dessous consistant à :

utiliser une pluralité de circuits à retard (2031, 2032, 2033) lesquels sont connectés en série ;
utiliser une pluralité de multiplicateurs dont chacun multiplie chaque coefficient de pondération prescrit (W1, W2, W3) par le résultat de chaque circuit à retard ;
utiliser un additionneur (2038) pour additionner les résultats desdits multiplicateurs,
dans lequel lesdits signaux modulés sont uniformisés d'une manière adaptative à mesure que les déformations desdits canaux radio évoluent.

3. Dispositif de réception de station mobile sur un canal descendant pour un système cellulaire d'accès multiple par répartition en code (CDMA) dans lequel une station de base module, en utilisant des séquences de bruit pseudo-orthogonal, des signaux de transmission vers une pluralité de stations mobiles, transmet les signaux modulés de manière synchrone, tandis que lesdites stations mobiles reçoivent les signaux modulés déformés par une pluralité de canaux radio dont les délais d'attente sont différents, dans lequel ladite station mobile comporte une première unité de réception (304), une seconde unité de réception (303) et une unité de sélection (305), où :

ladite première unité de réception comporte :

une unité de conversion de fréquence (202) destinée à convertir lesdits signaux modulés reçus par une antenne (201) en signaux de bande de base ;

une unité d'estimation de canaux (204) destinée à détecter des caractéristiques de fréquence desdits canaux radio sur la base desdits signaux modulés;

une unité de filtre (203) dont les caractéristiques de fréquence sont l'inverse de celles desdits canaux radio ; et

un démodulateur (207) destiné à démoduler les résultats de ladite unité de filtre dont les entrées sont lesdits signaux de bande de base ; et

ladite seconde unité de réception comporte :

une unité de démodulation (107) destinée à démoduler de manière indépendante chacun desdits signaux modulés transitant à travers une pluralité desdits canaux radio dont les délais d'attente sont différents, et une unité de combinaison (110) destinée à combiner les résultats de démodulation, et dans lequel ladite unité de sélection (305) sélectionne une sortie présentant une qualité supérieure de communication parmi les sorties par le biais desdites première et seconde unités de réception.

un démodulateur (207) destiné à démoduler les résultats de ladite unité de filtre dont les entrées sont lesdits signaux de bande de base ; et

ladite seconde unité de réception comporte :

une unité de démodulation (107) destinée à démoduler de manière indépendante chacun desdits signaux modulés transitant à travers une pluralité desdits canaux radio dont les délais d'attente sont différents, et une unité de combinaison (110) destinée à combiner les résultats de démodulation, et dans lequel ladite unité de sélection (305) sélectionne une sortie présentant une qualité supérieure de communication parmi les sorties par le biais desdites première et seconde unités de réception.

4. Système de communication sur un canal descendant pour un système cellulaire d'accès multiple par répartition en code (CDMA) dans lequel une station de base module, en utilisant des séquences de bruit pseudo-orthogonal, des signaux de transmission vers une pluralité de stations mobiles, transmet les signaux modulés de manière synchrone, tandis que lesdites stations mobiles reçoivent les signaux modulés déformés par une pluralité de canaux radio dont les délais d'attente sont différents, dans lequel ladite station mobile comporte une première unité de réception (304), une seconde unité de réception (303) et une unité de sélection (305), où :

ladite première unité de réception comporte :

une unité de conversion de fréquence (202) destinée à convertir lesdits signaux modulés reçus par une antenne (201) en signaux de bande de base ;

une unité d'estimation de canaux (204) destinée à détecter des caractéristiques de fréquence desdits canaux radio sur la base desdits signaux modulés ;

une unité de filtre (203) dont les caractéristiques de fréquence sont l'inverse de celles desdits canaux radio ; et

**Fig. 1**

**Fig. 2**

**Fig. 3**

Fig. 4

Fig. 5

Fig. 6

Fig. 7

Fig. 8

Fig. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *Proceedings of the IRE,* March 1958, 555-570
- **Anja Klein.** Zero Forcing and Minimum-Square-Error Equalization for Multiuser Detection in Code-Division Multiple-Access Channels. *IEEE TRANSACTIONS ON VEHICULAR TECHNOLOGY,* May 1996, vol. 45 (2
- Digital Communications. McGraw-Hill, 1989, 555-561
- **E. A. Lee ; D. G. Messerschmitt.** Digital Communication. Kluwer Academic Publisher, 1994, 546-548